# EUROPEAN PATENT SPECIFICATION

(11) **EP 3 145 043 B1**
(45) Date of publication and mention of the grant of the patent: **22.04.2020**
(21) Application number: 15792078.6
(22) Date of filing: 12.05.2015
(51) Int. Cl.: H02H 9/02, H02H 7/18, H02J 7/00, H02H 3/087, H02H 11/00

(54) **EXPLOSION-PROOF CIRCUIT, CHARGING CIRCUIT AND CHARGING/DISCHARGING PROTECTION CIRCUIT OF BATTERY**
EXPLOSIONSSICHERE SCHALTUNG, LADESCHALTUNG UND LADUNGS-/ENTLADUNGSSCHUTZSCHALTUNG EINER BATTERIE
CIRCUIT ANTIDÉFLAGRANT, CIRCUIT DE CHARGE ET CIRCUIT DE PROTECTION DE CHARGE/DÉCHARGE DE BATTERIE

(30) Priority: 13.05.2014 CN 201410201103; 27.11.2014 CN 201420727061 U; 27.11.2014 CN 201420725910 U
(43) Date of publication of application: 22.03.2017
(73) Proprietor: Beijing Tocel Electronics Co., Ltd., Beijing 100190 (CN)
(72) Inventor: SONG, Xiaoping, Beijing 100190 (CN); MA, Aang, Beijing 100190 (CN); LI, Fengshi, Beijing 100190 (CN)
(74) Representative: Lavoix
(86) International application number: PCT/CN2015/078782
(87) International publication number: WO 2015/172710

(56) References cited:
- CN-A- 101 908 755
- CN-A- 101 916 887
- CN-A- 102 025 177
- CN-A- 102 111 007
- CN-A- 103 618 014
- CN-A- 103 618 014
- CN-A- 103 956 721
- CN-U- 202 034 757
- CN-U- 203 063 859
- CN-U- 203 104 067
- CN-U- 203 826 946
- CN-U- 204 205 573
- CN-U- 204 216 632
- CN-Y- 200 973 022
- JP-A- 2013 165 631
- JP-U- H0 525 945
- US-A- 5 225 751
- US-A- 5 343 137
- US-A- 5 684 663
- US-A- 5 726 505
- US-A1- 2005 285 572
- US-A1- 2013 148 246
- US-B1- 6 992 467

## Description

### TECHNICAL FIELD

The present invention relates to the technical field of battery circuits, and more particularly relates to an explosion-proof circuit, charging circuit and charging/discharging protection circuit of a battery.

### BACKGROUND

In the process of using a battery, usually two cases will cause explosion of the battery: firstly, internal swelling of the battery causes the battery explosion; and secondly, overhigh load current of the battery causes the battery explosion. In the first case, an explosion-proof device is provided within each battery to effectively prevent battery explosion; and in the second case, overhigh load current shall be avoided to avoid battery explosion.

As shown in Fig. 1, the Chinese patent document CN202759272U discloses a current limiting circuit for an anti-explosion battery, where, the circuit mainly includes: a first comparator U1, a second comparator U2, a first electronic switch Q1, a second electronic switch Q2, a protective resistor R1 and a current sampling resistor R2; and meanwhile, the given reference voltage of the first comparator U1 is V1, and the given reference voltage of the second comparator U2 is V2. This circuit converts a load current value by the current sampling resistor R2 to a voltage value VR2 of a certain proportion, and compares the voltage VR2 with the reference voltage V1 by the first comparator U1 to control the switch-off of the electronic switch Q1, and compares the output end voltage VOUT of the second electronic switch Q2 with the reference voltage V2 by the second comparator U2 to control the switch-off of the electronic switch Q2. When a load is normal, the first electronic switch Q1 and the second electronic switch Q2 are in a saturated on state, and the load current flows through the first electronic switch Q1 and the second electronic switch Q2. When a load is short-circuited, the voltage VR2 is gradually increased, and is output after comparison by the first comparator U1, which will cause dynamic resistance of the first electronic switch Q1 to be gradually increased, thereby preventing overhigh load current. Moreover, as the dynamic resistance of the first electronic switch Q1 is gradually increased, the voltage V0UT will be gradually decreased, and is output after comparison by the second comparator U2, which will cause the electronic switch Q2 to be switched off, thereby cutting off the load current and protecting the first electronic switch Q1.

In the current limiting circuit for an anti-explosion battery disclosed in the above patent document, after a battery failure and before troubleshooting, the current limiting circuit is in a cut-off state, so that the electric quantity of the battery is stored in the battery and cannot be released, which may generate secondary hazards of the battery. Moreover, in the current limiting circuit for an anti-explosion battery disclosed in the above patent document, it is first necessary to give two accurate reference voltages, so that the switch-off of the electronic switch can be accurately controlled. If the given reference voltage is not accurate, then the switch-off of the electronic switch cannot be accurately controlled, which will cause all the current limiting circuits to fail to play a role in limiting the load current, and will cause all the power consumption to be loaded on the electronic switch, resulting in overheating and damaging of the electronic switch.

In addition, the circuit design of the charging power source for a battery available on the market is relatively simple. Therefore, when the charging power source is abnormal, it will cause damage to the battery being charged and is not safe, or when the charging power source is not connected to the battery, the battery will perform back discharge to the charging power source, which goes against the safety of the battery charging process, and will shorten the service life of the battery.

Documents US 5, 684, 663, JP 2013 165631 and US 2005/285572 disclose current limiting units having a controlled switch of known type.

### SUMMARY

One of the technical problems to be solved by the present invention is that the current limiting circuit in the prior art may generate secondary hazards of the battery, may fail to play a role in limiting the load current, and may result in overheating and damaging of the electronic switch.

In order to solve this technical problem, the present invention provides a discharging protection circuit of a battery according to claim 1.

Preferred embodiments of the present invention are the subject of the dependent claims, whose contents are to be considered as integral part of the present description.

The present invention provides a discharging protection circuit of a battery, including at least one current limiting protection module, for limiting the current flowing through a load, where the current limiting protection module includes: a first comparing unit, for judging whether the current flowing through a load exceeds a first discharging threshold value of the battery or not, and outputting a first electrical level when the current is more than the first discharging threshold value, or outputting a second electrical level when the current is less than or equal to the first discharging threshold value; and a current limiting unit, including a controlled switch and a current limiting power resistor connected to both ends of the controlled switch in parallel, where the controlled end of the controlled switch is connected to the first comparing unit, and enables the controlled switch to be switched off when receiving the first electrical level, or enables the controlled switch to be switched on when receiving the second electrical level, the controlled switch of the current limiting unit comprises: a first resistor (R31), a second resistor (R32), a third resistor (R35), a first N-channel MOS transistor (Q11), a second N-channel MOS transistor (Q13) and a reference voltage source (U7), wherein
one end of the third resistor (R35) serves as the controlled end of the controlled switch, the other end is respectively connected to one end of the second resistor (R32) and the grid electrode of the second N-channel MOS transistor (Q13);
the other end of the second resistor (R32) is respectively connected to the source electrode of the first N-channel MOS transistor (Q11) and the source electrode of the second N-channel MOS transistor (Q13);
the drain electrode of the second N-channel MOS transistor (Q13) is respectively connected to the grid electrode of the first N-channel MOS transistor (Q11) and one end of the first resistor (R31);
the other end of the first resistor (R31) is connected to the output end of a reference voltage source (U7); and
the source electrode and the drain electrode of the first N-channel MOS transistor (Q11) serve as the input end and the output end of the controlled switch.

Preferably, the first comparing unit includes a comparator (U3), a first input end of the comparator (U3) receives a voltage value of a current limiting detection resistor connected with a load in series, a second input end receives a preset voltage value, and outputs the first electrical level when the voltage value of the current limiting detection resistor is more than the preset voltage value, or outputs the second electrical level when the voltage value of the current limiting detection resistor is less than or equal to the preset voltage value.

Preferably, the discharging protection circuit of the battery further includes at least one secondary current limiting protection module, which includes: a second comparing unit, for judging whether a current flowing through a load exceeds a second discharging threshold value of the battery when the controlled switch of the current limiting unit is disconnected, and outputs an overcurrent signal when the current is more than the second discharging threshold value; and a first controlled switch, where the controlled end of the first controlled switch is connected to the second comparing unit, and the first controlled switch is disconnected when receiving the overcurrent signal, thereby cutting off the discharging circuit of the battery.

Preferably, the second comparing unit includes: a fifth resistor (R43), a sixth resistor (R45), a seventh resistor (R47), an eighth resistor (R49), a ninth resistor (R51), a first diode (D4), a fourth P-channel MOS transistor (Q15) and a fifth N-channel MOS transistor (Q18), where one end of the fifth resistor (M3) is connected to the positive electrode of the battery; the other end is respectively connected to one end of the sixth resistor (R45) and the source electrode of the fourth P-channel MOS transistor (Q15); the other end of the sixth resistor (R45) is respectively connected to one end of the seventh resistance (R47) and the grid electrode of the fourth P-channel MOS transistor (Q15); the drain electrode of the fourth P-channel MOS transistor (Q15) serves as by the output end of the second comparing unit; the other end of the seventh resistor (R47) is connected to the anode of the first diode (D4); the cathode of the first diode (D4) is connected to the drain electrode of the fifth N-channel MOS transistor (Q18); the grid electrode of the fifth N-channel MOS transistor (Q18) is respectively connected to one end of the ninth resistor (R51) and one end of the eighth resistor (R49); the source electrode of the fifth N-channel MOS transistor (Q18) is respectively connected to the other end of the ninth resistor (R51) and the negative electrode of the battery; the other end of the eighth resistor (R49) is connected to the negative terminal of a load.

Compared with the prior art, the above technical scheme of the present invention has the following advantages:
A discharging protection circuit of a battery provided by the present invention includes at least one current limiting protection module, for limiting the current flowing through a load and including: a first comparing unit, for judging whether the current flowing through a load exceeds a first discharging threshold value of the battery, and outputting a first electrical level when the current is more than the first discharging threshold value, or outputting a second electrical level when the current is less than or equal to the first discharging threshold value; and a current limiting unit, including a controlled switch and a current limiting power resistor connected to the input end and the output end of the controlled switch in parallel, where the controlled end of the controlled switch is connected to the first comparing unit, and enables the controlled switch to be disconnected when receiving a first electrical level, or enables the controlled switch to be switched on when receiving a second electrical level. In the discharging protection circuit of the battery provided by the present invention, when the current flowing through a load is normal, the controlled switch is switched on, and the circuit is normally switched on; when the current flowing through a load is more than a first discharging threshold value of the battery, the controlled switch is disconnected, so that the current flows through the current limiting power resistor to form a current limiting circuit, and the electric quantity of the battery is consumed through the current limiting power resistor. Therefore, the electric quantity of the battery is released in a relatively small safe current, thereby avoiding the problem that the battery generates secondary hazards due to the fact that the electric quantity of the battery is stored in the battery and cannot be released. Meanwhile, it is guaranteed that the circuit can reliably limit the load current, and will not cause all the power consumption to be loaded on the electronic switch, which would result in overheating and damaging of the electronic switch.

### BRIEF DESCRIPTION OF THE DRAWINGS

In order to make the contents of the present invention to be more clearly understood, the present invention is further described in detail below with reference to the specific embodiments and the accompanying drawings of the present invention, where
Fig. 1 shows a current limiting circuit of a known explosion-proof battery;
Fig. 2 is a circuit structure diagram of an explosion-proof circuit of a battery containing a current limiting module according to one example implementation;
Fig. 3 is a circuit structure diagram of an explosion-proof circuit of a battery containing two current limiting modules according to one example implementation;
Fig. 4 is a structure diagram of an overvoltage protection circuit containing an overvoltage protection diode according to one example implementation;
Fig. 5 is a structure diagram of an overvoltage protection circuit containing two overvoltage protection diodes according to one example implementation;
Fig. 6 is a structure diagram of a charging circuit of a battery according to example implementation;
Fig. 7 is a schematic diagram of a discharging protection circuit of a battery according to one embodiment of the present invention;
Fig. 8 is a structure diagram of a circuit of a current limiting protection module in a discharging protection circuit of a battery according to one embodiment of the present invention;
Fig. 9 is a schematic diagram of two current limiting protection modules in a discharging protection circuit of a battery according to one example implementation;
Fig. 10 is a schematic diagram of a discharging protection circuit of a battery according to one embodiment of the present invention;
Fig. 11 is a structure diagram of a circuit of a second comparing unit in a discharging protection circuit of a battery according to one embodiment of the present invention;
Fig. 12 is a schematic diagram of a discharging protection circuit of a battery according to one example implementation;
Fig. 13 is a structure diagram of a circuit of a temperature detecting unit in a discharging protection circuit of a battery according to one example implementation;
Fig. 14 is a schematic diagram of a discharging protection circuit of a battery according to one example implementation;
Fig. 15 is a structure diagram of a circuit of an overdischarging protection module in a discharging protection circuit of a battery according to one example implementation;
Fig. 16 is a structure diagram of a circuit of a balanced discharging protection module in a discharging protection circuit of a battery according to one example implementation;
Fig. 17 is a schematic diagram of a charging protection circuit of a battery according to one example implementation;
Fig. 18 is a structure diagram of a circuit of a battery back discharge preventing module in a charging protection circuit of a battery according to one example implementation;
Fig. 19 is a structure diagram of a circuit containing two battery back discharge preventing modules according to one example implementation;
Fig. 20 is a schematic diagram of a charging protection circuit of a battery according to one example implementation;
Fig. 21 is a structure diagram of a circuit of a charging power source overvoltage protection module in a charging protection circuit of a battery according to one example implementation;
Fig. 22 is a schematic diagram of a charging protection circuit of a battery according to one example implementation;
Fig. 23 is a structure diagram of a circuit of an overcharging protection module in a charging protection circuit of a battery according to one example implementation; and
Fig. 24 is a structure diagram of a circuit of a balanced charging protection module in a charging protection circuit of a battery according to one example implementation.

Reference numerals in the drawings: 11-current limiting protection module, 12-secondary current limiting protection module, 13-temperature protection module, 14-overdischarging protection module, 101-first comparing unit 102-current limiting unit, 102a-controlled switch, 121-second comparing unit 122-first controlled switch, 131-temperature detecting unit, 132-second controlled switch, 141-voltage detecting unit, 142-third controlled switch, 21-battery back discharge preventing module, 22-charging power source overvoltage protection module, 23-overcharging protection module, 211-charging power source detecting module, 212-controlled switch, 231-voltage detecting unit, and 232-first controlled switch.

### DETAILED DESCRIPTION

### Example 1

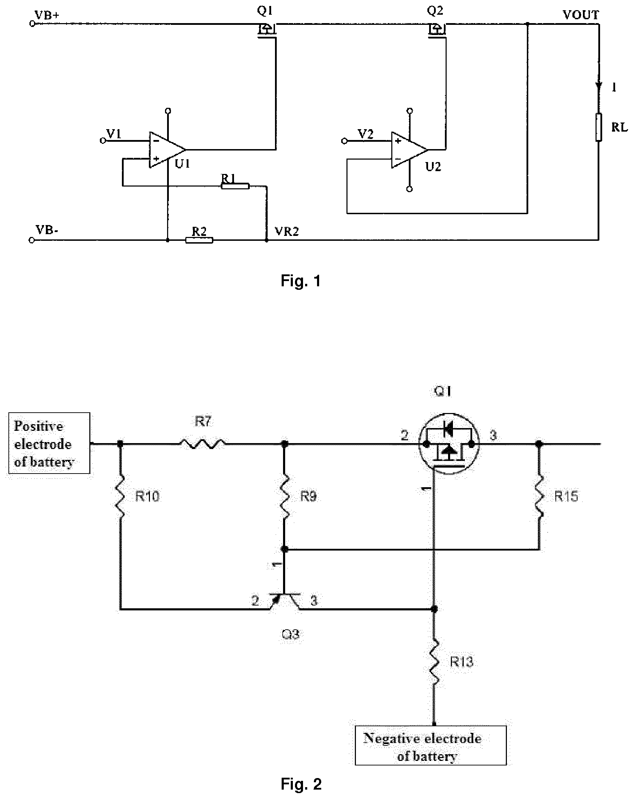

In an explosion-proof circuit of a battery according to example 1 is shown in Fig. 2, the power electronic switch Q1 is a P-channel enhancement mode MOS transistor, and the feedback control switch Q3 is a PNP triode. The explosion-proof circuit of the battery includes a module as follows:
a current limiting module, including an input end and an output end, where the input end of the current limiting module is connected to the positive electrode of the battery.

The current limiting module specifically includes: a current limiting resistor R7, a protective resistor R10, a control resistor R9, a feedback resistor R15, a control resistor R13, a power electronic switch Q1 and a feedback control switch Q3, where,
the power electronic switches Q1 and the feedback control switch Q3 respectively include an input end, an output end and a control end, and when the relative voltage between the input end and the control end of the power electronic switch Q1 is more than the threshold value of its threshold voltage, the power electronic switch Q1 is switched on; and when the relative voltage between the input end and the control end of the feedback control switch Q3 is more than the threshold value of its threshold voltage, the feedback control switch Q3 is switched on;
one end of the current limiting resistor R7 is connected to one end of the protective resistor R10, and the connection point thereof serves as the input end of the current limiting module;
the other end of the current limiting resistor R7 is connected to one end of the control resistor R9, and the connection point thereof serves as the input end of the power electronic switch Q1;
the other end of the protective resistor R10 is connected to the input end of the feedback control switch Q3;
the other end of the control resistor R9 is connected to the control end of the feedback control switch Q3, and the connection point thereof is connected to one end of the feedback resistor R15;
the other end of the feedback resistor R15 is connected to the output end of the power electronic switch Q1, and the connection point thereof serves as the output end of the current limiting module;
one end of the control resistor R13 is connected to the output end of the feedback control switch Q3, and the connection point thereof is connected to control end of the power electric switch Q1; and
the other end of the control resistor R13 is connected to the negative electrode of the battery.

In an explosion-proof circuit of a battery provided by example 1, when a load is normal, because a control resistor R9 is pulled up, a feedback control switch Q3 is in a cut-off state, and meanwhile, a control resistor R13 is pulled down to ground, so that a power electronic switch Q1 is switched on, and the current flows through a current limiting resistor R7 and the power electronic switch Q1 to the load. When a load is short-circuited, the voltage at the output end of the power electronic switch QI is close to the voltage of the negative electrode of the battery, and the voltage of the battery is divided by a control resistor R9 and a feedback resistor R15, so that the relative voltage between the input end and control end of the feedback control switch Q3 is more than the threshold value of its threshold voltage, thus enabling the feedback control switch Q3 to be switched on. Since the feedback control switch Q3 is switched on, a part of current flows through a protective resistor R10, the feedback control switch Q3 and the control resistor R13 to the negative electrode of the battery, and meanwhile, since the feedback control switch Q3 is switched on, a high electrical level will be generated on the control resistor R13, i.e., the control end of the power electronic switch Q1 is in a high electrical level. With the continuous enhancement of this high electrical level, the power electronic switch Q1 will be in an incompletely on state or in a cut-off state. When the power electronic switch Q1 is in an incompletely on state, internal resistance of the power electronic switch Q1 will be very high. Under the circumstance, the current flowing through the current limiting resistor R7 and the power electronic switch Q1 to a load will be limited, thereby playing a role in limiting overhigh load current; and when the power electronic switch Q1 is in a cut-off state, the load current is directly cut off to protect the power electronic switch Q1 from being damaged. Meanwhile, the electric quantity of the battery is released in a relatively small safe current by the current limiting resistor R7, the control resistor R9 and the feedback resistor R15, thereby avoiding the problem that the battery generates secondary hazards due to the fact that the electric quantity of the battery is stored in the battery and cannot be released. The electric quantity of the battery according to the present invention is released in a relatively small safe current by the current limiting resistor R7, the control resistor R9 and the feedback resistor R15, thereby avoiding the problem that the battery generates secondary hazards due to the fact that the electric quantity of the battery is stored in the battery and cannot be released. Moreover, since it is not necessary to give an accurate reference voltage, it is guaranteed that the circuit can reliably limit the load current, and it will not cause all the power consumption to be loaded on the electronic switch, which would result in overheating and damaging of the electronic switch.

### Example 2

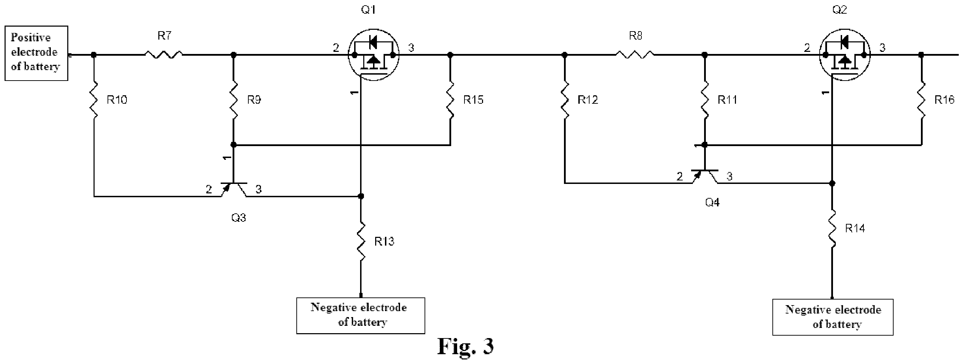

As shown in Fig. 3, as an explosion-proof circuit of a battery according to example 2, on the basis of the above example 1, there are two of the current limiting modules, and the two current limiting modules are connected in series.

An explosion-proof circuit of a battery is equipped with two current limiting modules, thereby further ensuring the circuit reliability, and when one of the current limiting modules fails, the circuit can still ensure accurately limiting the load current.

### Example 3

An explosion-proof circuit of a battery according to one example, on the basis the above examples 1 or 2, further includes an overvoltage protection module, where, the overvoltage protection module includes an input end, an output end and an earthing terminal, both the input end and the output end of the overvoltage protection module are connected to the output end of the current limiting module, and the earthing terminal of the overvoltage protection module is connected to the negative electrode of the battery.

An explosion-proof circuit of a battery provided by the present example is equipped with an overvoltage protection module to avoid generating overhigh voltage in the circuit and damaging devices.

### Example 4

An explosion-proof circuit of a battery according to one example, on the basis of the above example 3, further includes an overcurrent protection module, where, the overcurrent protection module includes an input end and an output end, the input end of the overcurrent protection module is connected to the output end of the current limiting module, and the output end of the overcurrent protection module is to be connected to one end of a load.

An explosion-proof circuit of a battery provided by the present invention is equipped with an overcurrent protection module to promptly cut off loads in the circuit in case of heavy current, and ensure the circuit safety.

### Example 5

An explosion-proof circuit of a battery according to example, on the basis of the above example 4, further includes a filter capacitor C8, one end of the filter capacitor C8 is connected to the positive electrode of the battery, and the other end of the filter capacitor C8 is connected to the negative electrode of the battery.

An explosion-proof circuit of a battery provided by the example 5 is equipped with a filter capacitor C8, so that the current output by the battery is more stable, and contributes to the load stability.

### Example 6

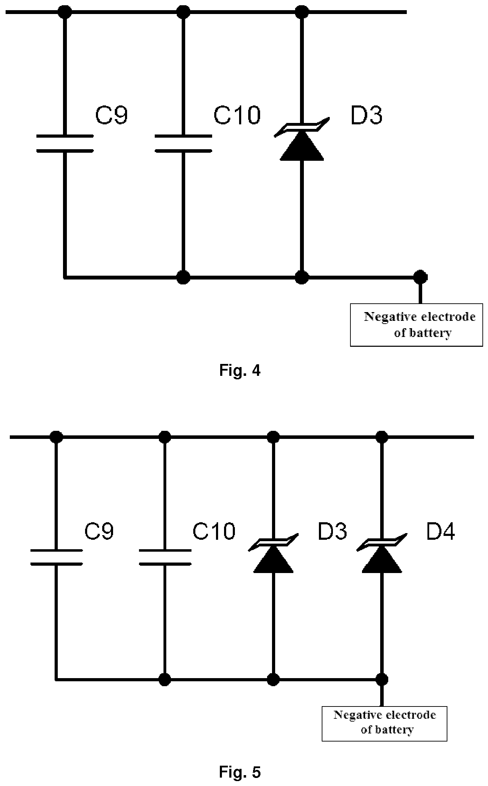

As shown in Fig. 4, as an explosion-proof circuit of a battery according to example 6, on the basis of the above example 3, the overvoltage protection module includes a capacitor C9, a capacitor C10, and an overvoltage protection diode D3, where,
one end of the capacitor C9 and one end of the capacitor C10 are respectively connected to the cathode of the overvoltage protection diode D3, and the connection points thereof serve as the input end and the output end of the overvoltage protection module;
the other end of the capacitor C9 and the other end of the capacitor C10 are respectively connected to the anode of the overvoltage protection diode D3, and the connection points thereof serve as the earthing terminal of the overvoltage protection module; and in an explosion-proof circuit of a battery provided by example 6, an overvoltage protection module includes a simple circuit, namely two capacitors and an overvoltage protection diode, thereby saving cost.

### Example 7

As shown in Fig. 5, as an explosion-proof circuit of a battery according to example 7, on the basis of the above example 6, the overvoltage protection module further includes an overvoltage protection diode D4, the cathode of the overvoltage protection diode D4 is connected to the cathode of the overvoltage protection diode D3, and the anode of the overvoltage protection diode D4 is connected to the anode of the overvoltage protection diode D3.

In an explosion-proof circuit of a battery provided by example 7, an overvoltage protection module is equipped with two overvoltage protection diodes to improve the reliability of the overvoltage protection module.

### Example 8

In an explosion-proof circuit of a battery according to example 8, on the basis of the above example 4, the overcurrent protection module is a resettable fuse F1, one end of the resettable fuse F1 serves as the input end of the overcurrent protection module, and the other end of the resettable fuse F1 serves as the output end of the overcurrent protection module.

In an explosion-proof circuit of a battery provided by example 8, an overcurrent protection module realizes the purpose of overcurrent protection using a resettable fuse F1, and promptly cuts off loads in the circuit in case of heavy current to ensure the circuit safety. When the current in the circuit returns to normal, power supply is recovered to facilitate use.

### Example 9

In an explosion-proof circuit of a battery according to example 9, on the basis of the above example 1, the power electronic switch Q1 is a P-channel enhancement mode MOS transistor, and the feedback control switch Q3 is a PNP triode.

In an explosion-proof circuit of a battery provided by example 9, the power electronic switch Q1 is a P-channel enhancement mode MOS transistor, and the feedback control switch Q3 is a PNP triode. Because the feedback control switch Q3 does not need to use power electronic devices, the triode price is lower than price of the power electronic devices, thereby saving cost.

### Example 10

As a charging circuit of a battery according to example 10, the battery charging circuit includes the explosion-proof circuit of the battery in any one of the above examples 1 to 9.

### Example 11

A charging circuit of a battery according to example 11, on the basis of the above example 10, further includes: a rectifier diode D1, where the anode of the rectifier diode D1 is connected to an output end of an external DC charging power source, and the cathode of the rectifier diode D1 is connected to an input end of a charger chip, thereby avoiding burning the charger chip because the electrodes of the external DC charging power source are not correctly connected.

### Example 12

A charging circuit of a battery according to example 12, on the basis of the above embodiment 11, further includes a rectifier diode D2, the anode of the rectifier diode D2 is connected to the cathode of the rectifier diode D1, and the cathode of the rectifier diode D2 is connected to the input end of the charger chip.

A charging circuit of a battery provided by the present invention is equipped with two rectifier diodes, so that when one rectifier diode fails, the circuit can still avoid burning the charger chip because the electrodes of an external DC charging power source are not correctly connected, thus improving the circuit safety.

### Example 13

A charging circuit of a battery according to example 13, on the basis of the above example 12, further includes a capacitor C1, one end of the capacitor C1 is directly connected to the cathode of the rectifier diode D2, and the other end of the capacitor C1 is grounded. The capacitor C1 filters the charging current, so that the charging current is steady.

### Example 14

A charging circuit of a battery according to example 14, on the basis of the above embodiment 13, includes a capacitor C2, which is connected to the capacitor C1 in parallel.

A charging circuit of a battery provided by example 14 is equipped with two capacitors connected in parallel to achieve better filtering effects, and can guarantee smooth filtering when one of the capacitors therein fails.

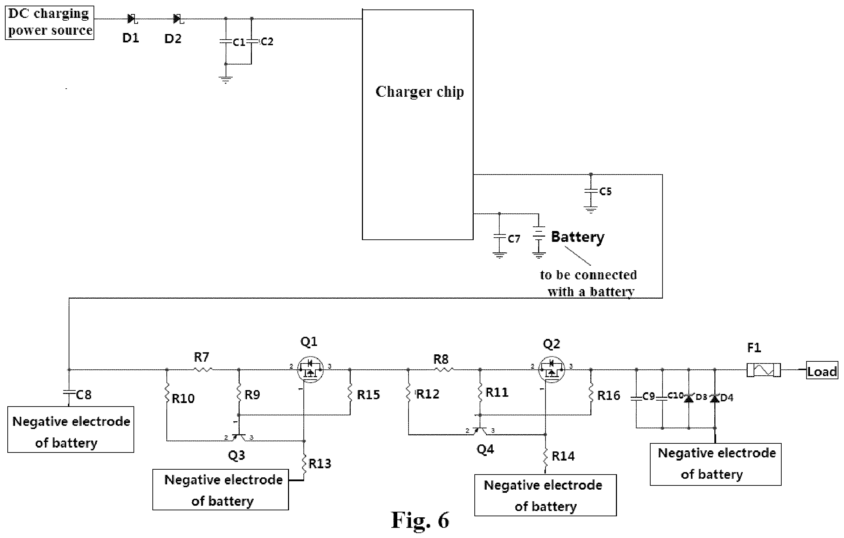

A specific implementation includes various functional circuits in the above examples, as shown in Fig. 6.

### Embodiment 1

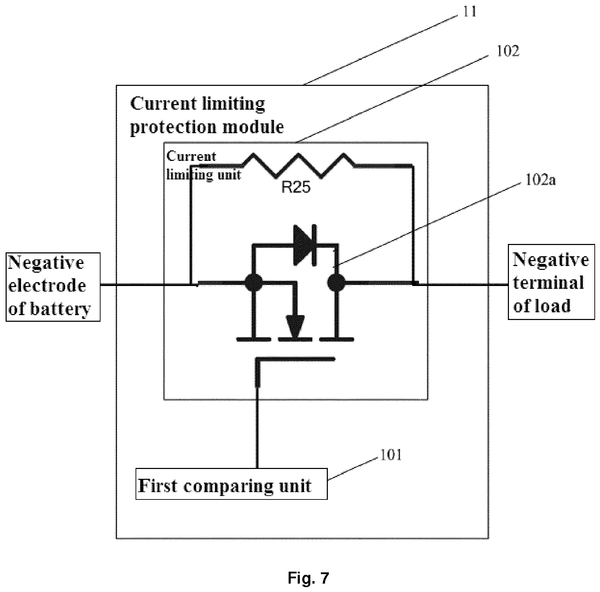

As shown in Fig. 7, a discharging protection circuit of a battery provided by the present invention includes at least one current limiting protection module 11, for limiting the current flowing through a load, and including the following units:
a first comparing unit 101, for judging whether the current flowing through a load exceeds a first discharging threshold value of the battery, and outputting a first electrical level when the current is more than the first discharging threshold value, or outputting a second electrical level when the current is less than or equal to the first discharging threshold value; and
a current limiting unit 102, including a controlled switch 102a (schematically expressed as a MOS transistor in the figure, other controlled switches may also be used) and a current limiting power resistor R25 connected to two ends of the controlled switch 102a in parallel, where the controlled end of the controlled switch 102a is connected to the first comparing unit 101, and enables the controlled switch 102a to be disconnected when receiving the first electrical level, or enables the controlled switch I02a to be switched on when receiving the second electrical level. In the discharging protection circuit of the battery provided by the present embodiment, when the current flowing through a load is normal, the controlled switch 102a is switched on, and the circuit is normally switched on; and when the current flowing through a load is more than a first discharging threshold value of the battery, the controlled switch 102a is disconnected, so that the current flows through the current limiting power resistor R25 to form a current limiting circuit, and the electric quantity of the battery is consumed through the current limiting power resistor R25. Therefore, the electric quantity of the battery is released in a relatively small safe current, thereby avoiding the problem that the battery generates secondary hazards due to the fact that the electric quantity of the battery is stored in the battery and cannot be released. Meanwhile, it is guaranteed that the circuit can reliably limit the load current, and will not cause all the power consumption to be loaded on the electronic switch, which would result in overheating and damaging of the electronic switch.

In actual use, it is easier to control the circuit of the negative electrode of a battery than to control the circuit of the positive electrode of the battery. Therefore, the current limiting protection module 11 is preferably to be set between the negative electrode of the battery and the negative terminal of a load.

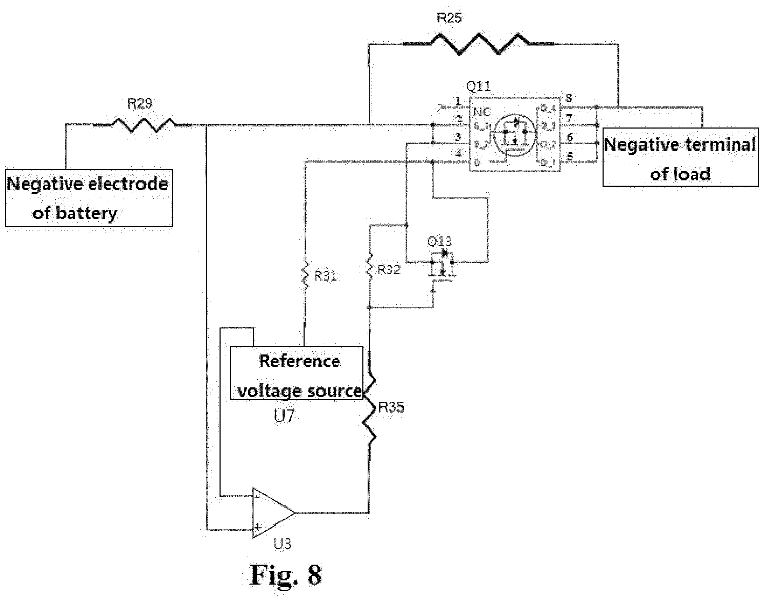

As shown in Fig. 8, the first comparing unit 101 according to the embodiment may include a comparator U3, a first input end (a non-inverted input end in Fig. 3) of the comparator U3 receives a voltage value of a current limiting detection resistor R29 connected to a load in series, a second input end (an inverted input end in Fig. 3) receives a preset voltage value (the preset voltage value may be provided by a reference voltage source U7), and outputs the first electrical level when the voltage value of the current limiting detection resistor R29 is more than the preset voltage value, or outputs a second electrical level when the voltage value of the current limiting detection resistor R29 is less than or equal to the preset voltage value. It shall be appreciated by those skilled in the art that, other comparison circuits may also be used, such as a single-chip microcomputer, as long as the circuit can achieve the function of comparing two voltages.

It is simple and easy to achieve comparing the current flowing through a load with a first discharging threshold value of the battery by comparing the voltage value of the current limiting detection resistor R29 with a preset voltage value. Besides, the comparator is cheap and easy to use.

As shown in Fig. 8, the controlled switch 102a of the current limiting unit 102 according to the embodiment may include: a first resistor R31, a second resistor R32, a third resistor R35, a first N-channel MOS transistor Q11, a second N-channel MOS transistor Q13 and a reference voltage source U7; where, one end of the third resistor R35 serves as the controlled end of the controlled switch 102a, and the other end is respectively connected to one end of the second resistor R32 and the grid electrode of the second N-channel MOS transistor Q13; the other end of the second resistor R32 is respectively connected to the source electrode of the first N-channel MOS transistor Q11 and the source electrode of the second N-channel MOS transistor Q13; the drain electrode of the second N-channel MOS transistor Q13 is respectively connected to the grid electrode of the first N-channel MOS transistor Q11 and one end of the first resistor R31; the other end of the first resistor R31 is connected to the output end of the reference voltage source U7; and the source electrode and the drain electrode of the first N-channel MOS transistor Q11 serve as both ends of the controlled switch 102a.

In the controlled switch I02a provided by the embodiment, when the current flowing through a load is normal, i.e., the controlled end of the controlled switch 102a receives the second electric level, the first N-channel MOS transistor Q11 is switched on, and the current flows through the first N-channel MOS transistor Q11 to form a circuit; and when the current flowing through a load is more than the first discharging threshold value, i.e., the controlled end of the controlled switch 102a receives the first electric level, the first N-channel MOS transistor Q11 is switched off, and the current flows through the current limiting power resistor R25 to form a current limiting circuit.

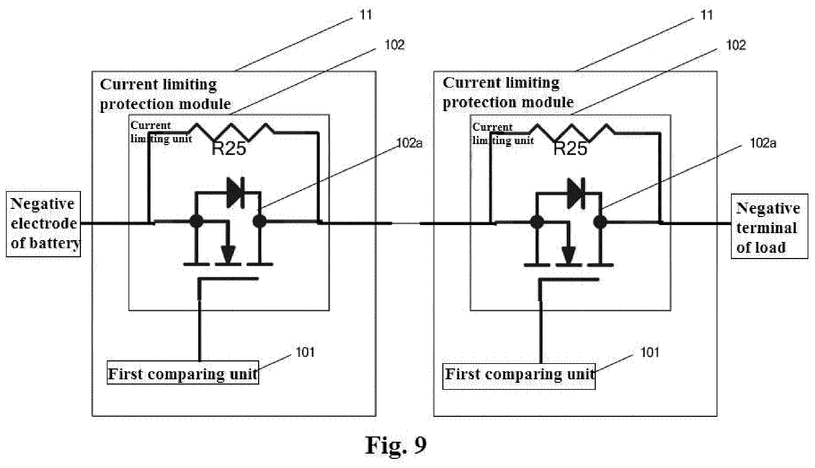

Fig. 7 only shows one current limiting protection module 11, but there may be two of the current limiting protection modules 11, as shown in Fig. 9. The current limiting units 102 of two current limiting protection modules 11 connected in series further guarantee the circuit reliability, and can still guarantee the circuit to accurately limit the load current when one of the current limiting protection modules 11 therein fails. It shall be appreciated by those skilled in the art that, more current limiting protection modules may also be used.

### Embodiment 2

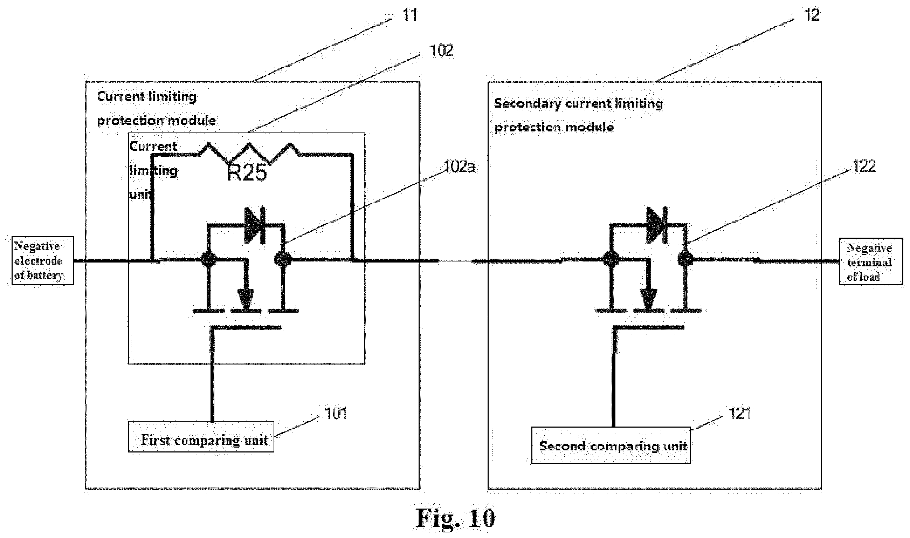

Fig. 10 is a schematic diagram of a discharging protection circuit of a battery according to the embodiment, which is different from the schematic diagram of a discharging protection circuit of a battery according to embodiment 15 shown in Fig. 7 as follows: the schematic diagram of the discharging protection circuit of the battery shown in Fig. 10 further includes: at least one secondary current limiting protection module 12 including a second comparing unit 121, for judging whether a current flowing through a load exceeds a second discharging threshold value of the battery when the controlled switch 102a of the current limiting unit 102 is disconnected, and outputting an overcurrent signal when the current is more than the second discharging threshold value; and a first controlled switch 122, where the controlled end of the first controlled switch 122 is connected to the second comparing unit 121, and the first controlled switch 122 is disconnected when receiving the overcurrent signal, thereby cutting off the discharging circuit of the battery.

A secondary current limiting protection module 12 is provided to further detect the current flowing through a load, when the controlled switch 102a of the current limiting unit 102 is disconnected, compare the current value currently detected under the circumstance to the second discharging threshold value of the battery, and switch off the first controlled switch 122 to cut off the discharging circuit of the battery if this current value is further increased to exceed the second discharging threshold value of the battery. This further ensures that the current flowing through the load falls within a safe range.

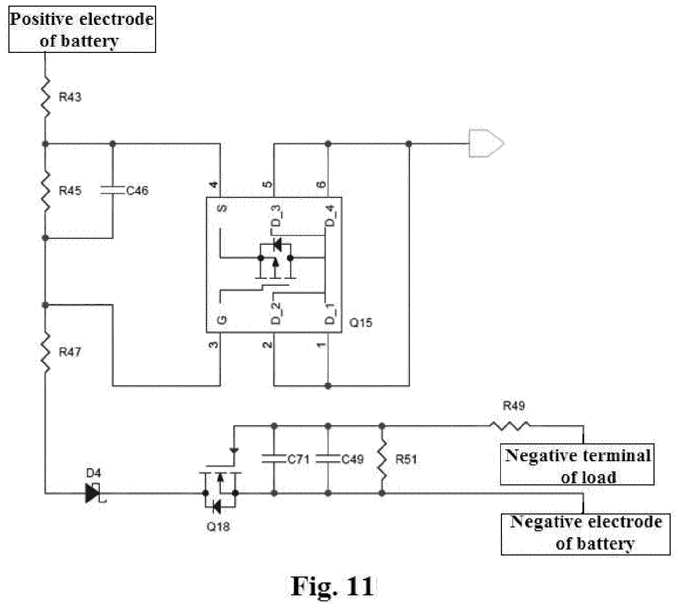

As shown in Fig. 11, the second comparing unit 121 according to the embodiment may include: a fifth resistor R43, a sixth resistor R45, a seventh resistor R47, an eighth resistor R49, a ninth resistor R51, a first diode D4, a fourth P-channel MOS transistor Q15 and a fifth N-channel MOS transistor Q18, where one end of the fifth resistor R43 is connected to the positive electrode of the battery; the other end is respectively connected to one end of the sixth resistor R45 and the source electrode of the fourth P-channel MOS transistor Q15; the other end of the sixth resistor R45 is respectively connected to one end of the seventh resistance R47 and the grid electrode of the fourth P-channel MOS transistor Q15; the drain electrode of the fourth P-channel MOS transistor Q15 serves as by the output end of the second comparing unit 21; the other end of the seventh resistor R47 is connected to the anode of the first diode D4; the cathode of the first diode D4 is connected to the drain electrode of the fifth N-channel MOS transistor Q18; the grid electrode of the fifth N-channel MOS transistor Q18 is respectively connected to one end of the ninth resistor R51 and one end of the eighth resistor R49; the source electrode of the fifth N-channel MOS transistor Q18 is respectively connected to the other end of the ninth resistor R51 and the negative electrode of the battery; the other end of the eighth resistor R49 is connected to the negative terminal of a load. In Fig. 11, the capacitor C46 and the resistor R45 are connected in parallel to play a role in filtering, and the capacitor C71, the capacitor C49 and the resistor R51 are connected in parallel to play a role in filtering, too.

For the second comparing unit 121 according to the embodiment, when the current flowing through a load does not exceed the second discharging threshold value of the battery, then neither the fifth N-channel MOS transistor Q18 nor the fourth P-channel MOS transistor Q15 is switched on, and the second comparing unit 121 does not output an overcurrent signal; and when the current flowing through a load is further increased to exceed the second discharging threshold value of the battery, the fifth N-channel MOS transistor Q18 is switched on, so that the fourth P-channel MOS transistor Q15 is also switched on, and the second comparing unit 121 outputs a high electrical level, i.e., outputting an overcurrent signal.

Preferably, there may be two or more of the secondary current limiting protection modules. When the second comparing unit 121 of any one of the plurality of the secondary current limiting protection modules 12 outputs the overcurrent signal, the corresponding first controlled switch 122 is controlled to cut off the discharging circuit of the battery. The at least two secondary current limiting protection modules 12 are provided to further guarantee the circuit reliability, and can still ensure the circuit to accurately limit the load current when one of the current limiting protection modules 12 fails.

### Example 17

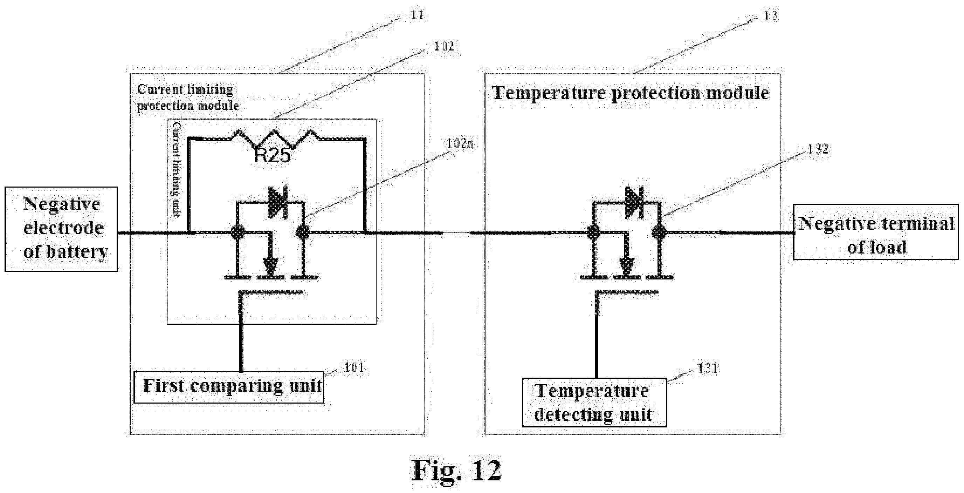

Fig. 12 is a schematic diagram of a discharging protection circuit of a battery according to example 17, as follows: the schematic diagram of the discharging protection circuit of the battery shown in Fig. 12 further includes: at least one temperature protection module 13, including: a temperature detecting unit 131, for judging whether a temperature of the battery exceeds a permissible temperature threshold value of the battery, and outputting an overtemperature signal when the temperature of the battery is more than the permissible temperature threshold value; and a second controlled switch 132, where the controlled switch may be achieved by a MOS transistor, the controlled end of the second controlled switch 132 is connected to the temperature detecting unit 131, and the second controlled switch 132 is disconnected when receiving the overtemperature signal, thereby cutting off the discharging circuit of the battery.

The temperature protection module 13 is provided to detect the temperature of the battery, so as to ensure that the temperature of the battery is not likely to be too high, and ensure the safety of batteries in service.

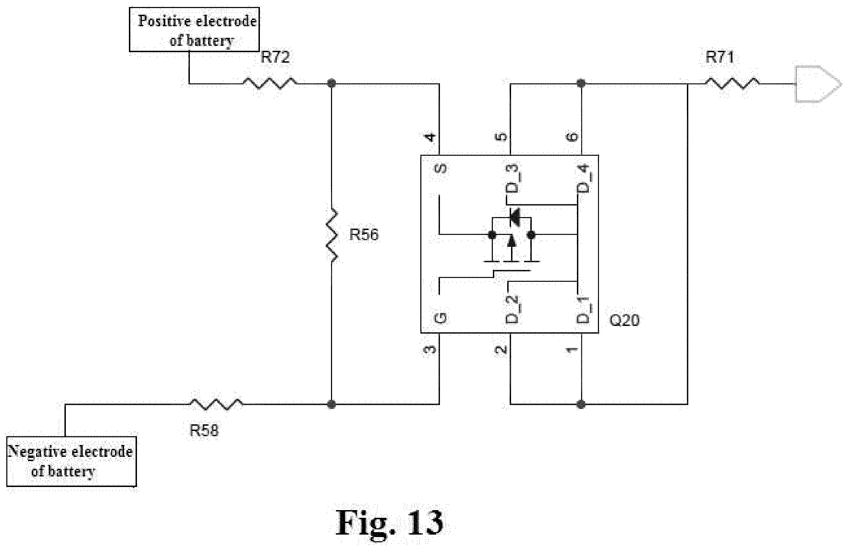

Preferably, as shown in Fig. 13, the temperature detecting unit 131 in the example includes: a third P-channel MOS transistor Q20, a positive temperature coefficient thermistor R56, a negative temperature coefficient thermistor R58 and a fourth resistor R72, where, the grid electrode of the third P-channel MOS transistor Q20 is respectively connected to one end of the negative temperature coefficient thermistor R58 and one end of the positive temperature coefficient thermistor R56; the source electrode of the third P-channel MOS transistor Q20 is respectively connected to the other end of the positive temperature coefficient thermistor R56 and one end of the fourth resistor R72; the drain electrode of the third P-channel MOS transistor Q20 serves as the output end of the temperature detecting unit 31; the other end of the negative temperature coefficient thermistor R58 is connected to the negative electrode of the battery; and the other end of the fourth resistor R72 is connected to the positive electrode of the battery. In Fig. 13, the resistor R71 is connected to the drain electrode of the third P-channel MOS transistor Q20 to play a role in protecting the third P-channel MOS transistor Q20.

The temperature detecting unit 131 according to the example collects the battery temperature changes by a positive temperature coefficient thermistor R56 and a negative temperature coefficient thermistor R58. When the battery temperature exceeds the permissible temperature threshold value, the third P-channel MOS transistor Q20 is switched on, and the temperature detecting unit 131 outputs a high electrical level, i.e., outputting the overtemperature signal.

Preferably, there may be two or more of the temperature detecting units 131. the temperature detecting unit 131 of any one of the plurality of the temperature protection modules 13 outputs the overtemperature signal, then the corresponding second controlled switch 131 is controlled to cut off the discharging circuit of the battery. The at least two temperature protection modules 13 are provided to further guarantee the circuit reliability, and can still ensure the circuit to accurately limit the battery temperature when one of the temperature protection modules 13 fails.

### Example 18

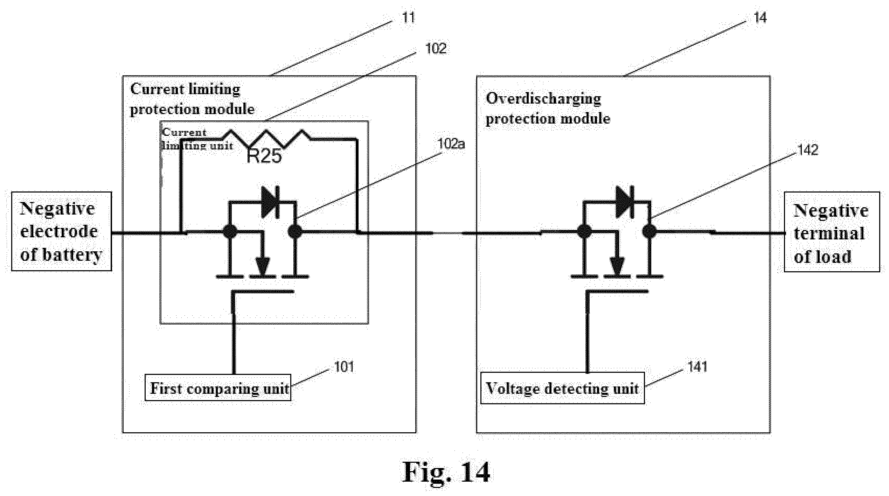

Fig. 14 is a schematic diagram of a discharging protection circuit of a battery according to example 18, which is different than the schematic diagram according to Fig. 7 as follows: the schematic diagram of the discharging protection circuit of the battery shown in Fig. 14 further includes: at least one overdischarging protection module 14, including: a voltage detecting unit 141, for judging whether the voltage of the battery is less than an overdischarging voltage threshold of the battery, and outputting an overtdischarging signal when the voltage of the battery is less than the overdischarging voltage threshold; and a third controlled switch 142, where the controlled end of the third controlled switch 142 is connected to the voltage detecting unit 141, and the third controlled switch 142 is disconnected when receiving the overdischarging signal, thereby cutting off the discharging circuit of the battery.

The overdischarging protection module 14 is provided to guarantee that the battery voltage is not less than the overdischarging voltage threshold of the battery. Battery overdischarging would shorten the service life of the battery. Such design has effectively prolonged the service life of batteries.

Preferably, the voltage detecting unit 141 according to the embodiment is further used for judging whether the voltage of the battery is more than an overdischarging termination voltage threshold of the battery when the third controlled switch 142 is disconnected, and controlling the third controlled switch to be switched on again to switch on the discharging circuit of the battery when the battery voltage is more than the overdischarging termination voltage threshold, so as to promptly switch on the discharging circuit of the battery when the voltage of the battery is increased to be more than the overdischarging termination voltage threshold of the battery, and promptly recover discharging of the battery.

In actual use, there may be two or more of the overdischarging protection modules 14, and the third controlled switches 142 of the overdischarging protection modules 14 may be connected in series. When the voltage detecting unit 141 of any one of the overdischarging protection modules 14 outputs the overdischarging signal, the corresponding third controlled switch 142 is controlled to cut off the discharging circuit of the battery. A plurality of the overdischarging protection modules 14 are provided to improve the reliability of the circuit.

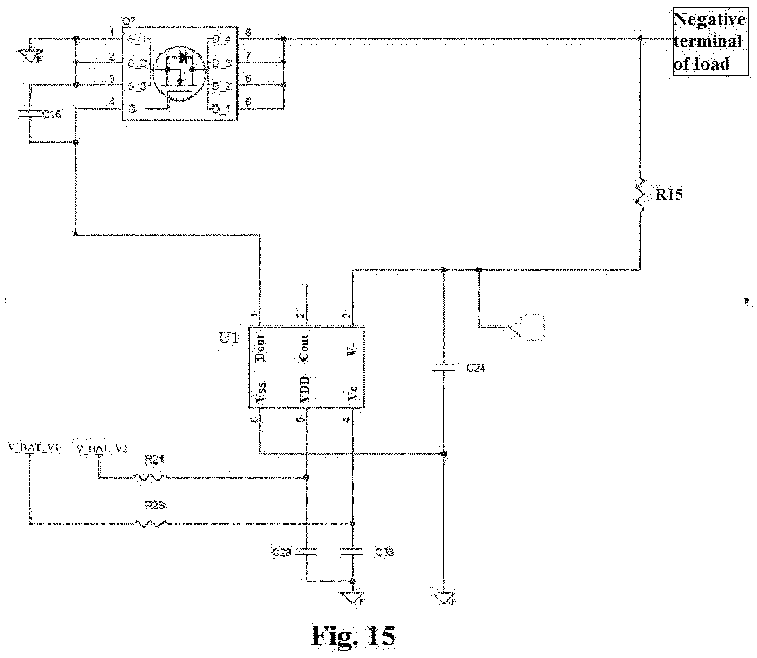

As a specific implementation shown in Fig. 15, when there are two of the batteries connected in series, the voltage detecting unit 141 may be implemented by a chip R5460, and the third controlled switch 142 may be implemented by an N-channel MOS transistor Q7, where, the grid electrode of the N-channel MOS transistor Q7 is connected to the overdischarging control pin (Dout) of the chip R5460; the source electrode of the N-channel MOS transistor Q7 is connected to the negative electrode of the battery; and the drain electrode of the N-channel MOS transistor Q7 is connected to the negative terminal of a load. In Fig. 15, V_BAT_V1 represents the voltage of one battery, and V_BAT_V2 represents the sum of voltage of two batteries connected in series. When the chip R5460 detects that the battery voltage is less than the overdischarging voltage threshold, the overdischarging control pin (Dout) outputs an overdischarging signal, and controls the N-channel MOS transistor Q7 to be switched off to cut off the discharging circuit of the battery; and when the chip R5460 detects that the battery voltage is more than the overdischarging termination voltage threshold of the battery, the overdischarging control pin (Dout) outputs an overdischarging termination signal, and controls the N-channel MOS transistor Q7 to be switched on again to switch on the discharging circuit of the battery. The connection of other pins of the chip R5460 has nothing to do with the inventiveness of the present invention, and is not described in detail here. The initial connection thereof may be kept.

In actual use, the first controlled switch 122 and the second controlled switch 132 may also be the N-channel MOS transistor Q7, and then the output end of the the second comparing unit 121 and the output end of the temperature detecting unit 131 may be connected to the overcurrent detection pin (V-) of the chip R5460. When the overcurrent detection pin (V-) of the chip R5460 detects that the second comparing unit 121 outputs an overcurrent signal, the chip R5460 controls the N-channel MOS transistor Q7 to be switched off by the overdischarging control pin (Dout), so as to cut off the discharging circuit of the battery; and when the overcurrent detection pin (V-) of the chip R5460 detects that the temperature detecting unit 131 outputs an overtemperature signal, the chip R5460 controls the N-channel MOS transistor Q7 to be switched off by the overdischarging control pin (Dout), so as to cut off the discharging circuit of the battery. Such use contributes to cost saving, and the circuit integration and miniaturization. It shall be appreciated by those skilled in the art that other chips or circuits may also be used, when there is only one battery, a chip R5402 may be used for implementation, and the pin of the chip R5402 may be connected with reference to the chip R5460 mentioned above.

Preferably, the discharging protection circuit of the battery provided by the example may further include a balanced discharging protection module, for judging, when there are two of the batteries connected in series, whether the voltage difference between the two batteries exceeds a preset value, and carrying out balanced discharging when the voltage difference between the two batteries is more than the preset value, or stopping balanced discharging of the two batteries when the voltage difference between the two batteries is less than or equal to the preset value. Balanced discharging of the two batteries helps to ensure that the electric quantity of the two batteries is identical.

In the process of using two batteries connected in series, their voltage will be different, i.e., the electric quantity of the batteries is imbalanced. If two batteries are used in an imbalanced state in a long time, then it is likely to cause a risk of damaging the batteries. The balanced discharging protection module can detect the electric quantity of two batteries, and carries out balanced discharging of two batteries at a preset balanced current value when detecting that the voltage difference between the two batteries is more than a preset value, or stops balanced discharging of two batteries when detecting that the voltage difference between the two batteries is less than or equal to the preset value.

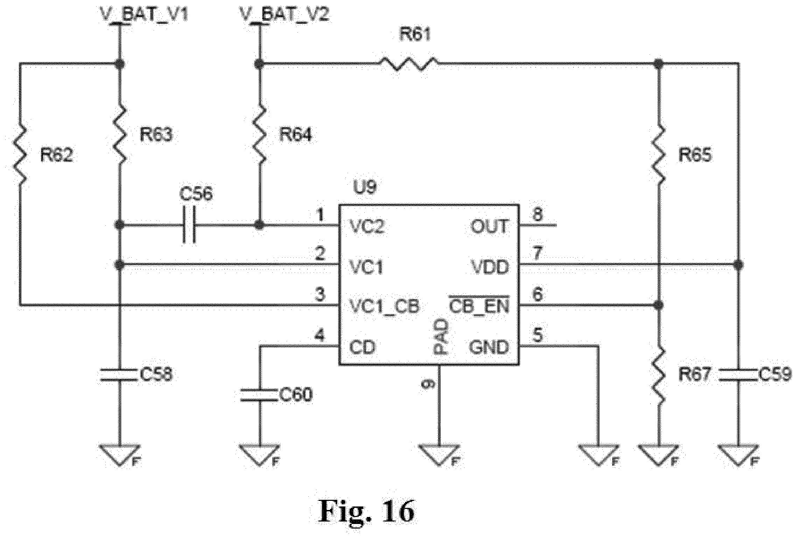

As a specific implementation shown in Fig. 16, the balanced discharging protection module may be implemented using a chip BQ29209.

### Example 19

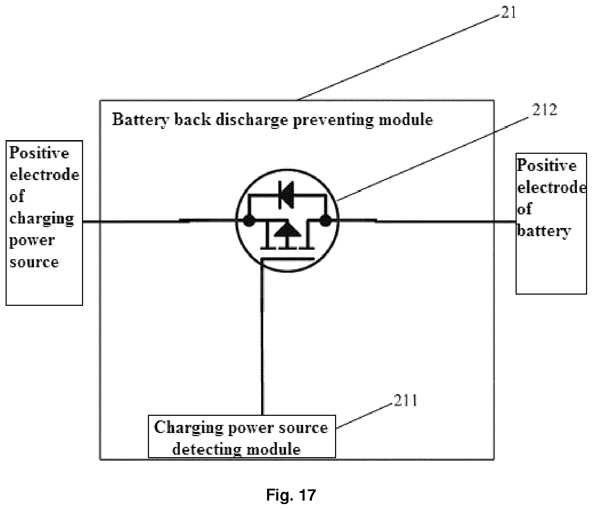

As shown in Fig. 17, a charging protection circuit of a battery provided by example 19 includes at least one battery back discharge preventing module 21, for preventing the battery from back discharge to the charging power source, and including the following members:
a charging power source detecting module 211, for judging whether the charging power source is correctly connected to the battery, and outputting a first electrical level when the charging power source is correctly connected, or outputting a second electrical level when the charging power source is not correctly connected; and
a controlled switch 212, where the input end of the controlled switch 212 (schematically expressed as a MOS transistor in the figure, other controlled switches may also be used) is connected to the positive electrode of the charging power source, the output end of the controlled switch 102 is connected to the positive electrode of the battery, and the controlled end of the controlled switch 102 is connected to the charging power source detecting module 211, and the controlled switch 102 is switched on when receiving the first electrical level, or is disconnected when receiving the second electrical level.

A variety of charging power sources are available on the market, different batteries correspond to different types of charging power sources, and the correct connection between the charging power source and the battery means that: if a charging power source is a high capacity battery, the high capacity battery matches with a battery to be charged, and they are connected with good contact; and if a charging power source is a charger, the charger matches with a battery, the charger plug is correctly connected, and the charger is correctly connected to the battery with good contact. Those skilled in the art should understand that the correct connection between the charging power source and the battery in a broad sense means the connection conditions required to correctly charge the battery by the charging power source. If the voltage of the charging power source falls within a preset range, then it is considered that this charging power source can charge the battery.

The battery back discharge preventing module is provided to guarantee that the charging circuit of the battery is switched on only when the battery is correctly connected to the charging power source, thereby ensuring the charging safety of the battery without back discharge to the charging power source, prolonging the service life of the battery, and saving energy.

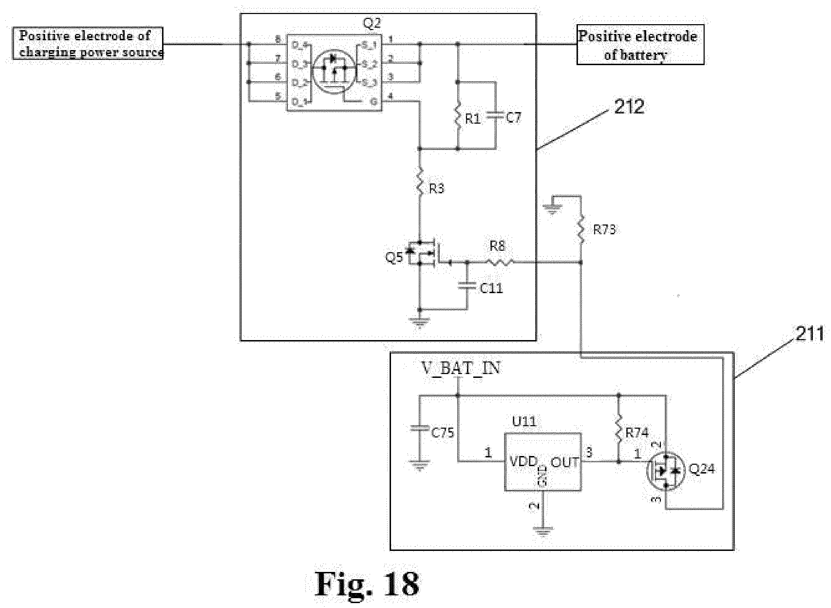

Preferably, as shown in Fig. 18, in the charging protection circuit of the battery, the charging power source detecting module 211 may include: a Hall sensor U11, a first P-channel MOS transistor Q24 and a first resistor R74, where, the input end of the Hall sensor U11 is respectively connected to the positive electrode (expressed as V_BAT_IN in Fig. 2) of the charging power source, one end of the first resistor R74 and the source electrode of the first P-channel MOS transistor Q24, the output end of the Hall sensor U11 is respectively connected to the other end of the first resistor R74 and the grid electrode of the first P-channel MOS transistor Q24 for detecting whether the charging power source is correctly connected to the battery; and the drain electrode of the first P-channel MOS transistor Q24 serves as the output end of the charging power source detecting module 11. In Fig. 2, the capacitor C75 is connected between the positive electrode and the negative electrode of the charging power source, and plays a role in filtering. The Hall sensor U11 may be implemented by, e.g., a chip WSH131, is used for detecting whether the charging power source is correctly connected to the battery, and contributes to the circuit integration and miniaturization.

Preferably, as shown in Fig. 18, the controlled switch 212 may include: a second P-channel MOS transistor Q2, a third N-channel MOS transistor Q5, a second resistor R1, a third resistor R3 and a fourth resistor R8, where, one end of the fourth resistor R8 serves as the controlled end of the controlled switch 12; the other end is connected to the grid electrode of the third N-channel MOS transistor Q5; the source electrode of the third N-channel MOS transistor Q5 is connected to the negative electrode of the charging power source; the drain electrode of the third N-channel MOS transistor Q5 is connected to one end of the third resistor R3; the other end of the third resistor R3 is respectively connected to the grid electrode of the second P-channel MOS transistor Q2 and one end of the second resistor R1; the other end of the second resistor R1 is connected to the source electrode of the second P-channel MOS transistor Q2; the drain electrode of the second P-channel MOS transistor Q2 serves as the input end of the controlled switch; and the source electrode of the second P-channel MOS transistor Q2 serves as the output end of the controlled switch. In Fig. 2, the resistor R73 and the fourth resistor R8 connected in series are connected to the negative electrode of the charging power source, and play a role in protecting the third N-channel MOS transistor Q5.

In the controlled switch 212 provided by the embodiment, when the controlled end of the controlled switch 212 receives a first electrical level, i.e., the charging power source is correctly connected to the battery, both the second P-channel MOS transistor Q2 and the third N-channel MOS transistor Q5 are switched on, and the battery is normally charged; and when the controlled end of the controlled switch 212 receives a second electrical level, i.e., the charging power source is not correctly connected to the battery, the third N-channel MOS transistor Q5 is switched off, and meanwhile, the second P-channel MOS transistor Q2 is switched off, thereby cutting off the circuit of back discharge to the charging power source by the battery. Meanwhile, compared with the circuit using a diode for anti-charging in the prior art, a second P-channel MOS transistor Q2 used on the main charging circuit of the battery reduces the voltage drop on the main circuit, because the voltage drop when the MOS transistor is switched on is much smaller than the voltage drop when the diode is switched on, thereby facilitating better battery charging.

Preferably, there may be two or more of the battery back discharge preventing modules 21, and the controlled switches 212 of the battery back discharge preventing modules 21 are connected in series. When the charging power source detecting module 211 of any one of the plurality of the battery back discharge preventing modules 21 outputs a second electrical level, then the corresponding controlled switch 212 is controlled to cut off the charging circuit of the battery. The at least two battery back discharge preventing modules 21 are provided to further guarantee the circuit reliability, and can still ensure the circuit to accurately prevent the battery from back discharge to the charging power source when one of the battery back discharge preventing modules 21 fails.

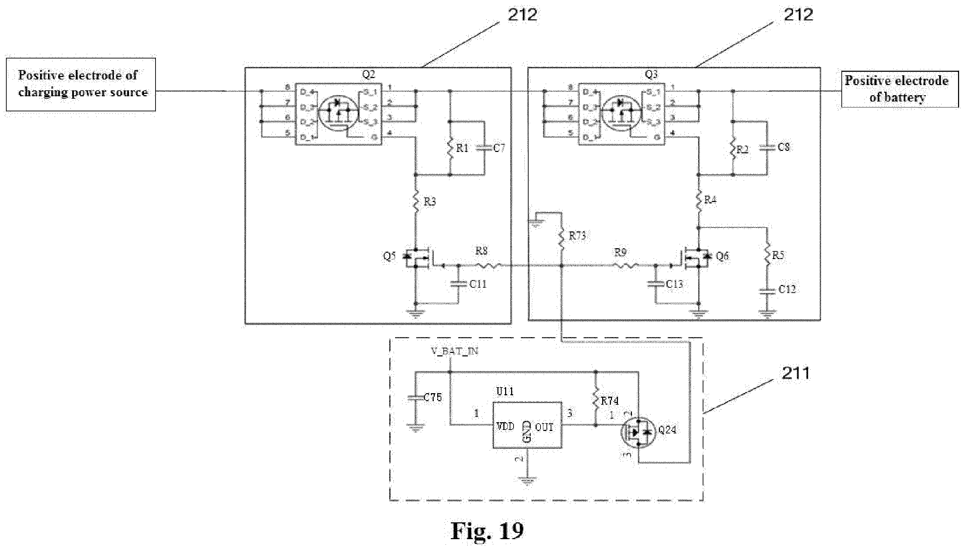

In actual use, because of the high reliability of the Hall sensor in detecting whether the battery is correctly connected to the charging power source, a plurality of battery back discharge preventing modules 21 may share the charging power source detecting module 211, and it is only necessary to arrange a plurality of controlled switches 212. Fig. 19 shows an embodiment using a charging power source detecting module 211 and two controlled switches 212. The charging power detecting module 211 outputs a first electrical level when detecting that the battery is correctly connected to the charging power source, then the second P-channel MOS transistor Q2, the third N-channel MOS transistor Q5, the P-channel MOS transistor Q3, and the N-channel MOS transistor Q6 are all switched on, and the battery is normally charged; or the charging power detecting module 211 outputs a second electrical level when detecting that the battery is not correctly connected to the charging power source, then the second P-channel MOS transistor Q2, the third N-channel MOS transistor Q5, the P-channel MOS transistor Q3, and the N-channel MOS transistor Q6 are all switched off, thereby cutting off the charging circuit of the battery, and cutting off the circuit of back discharge to the charging power source by the battery.

### Example 20

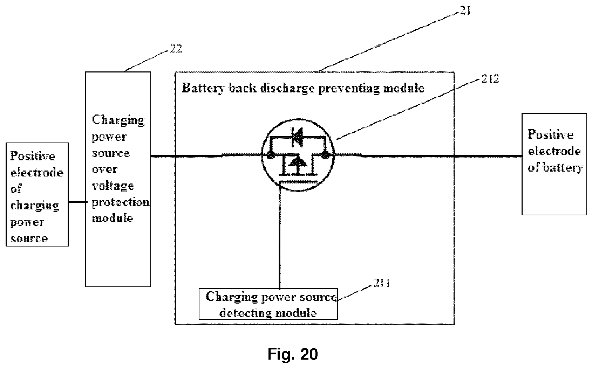

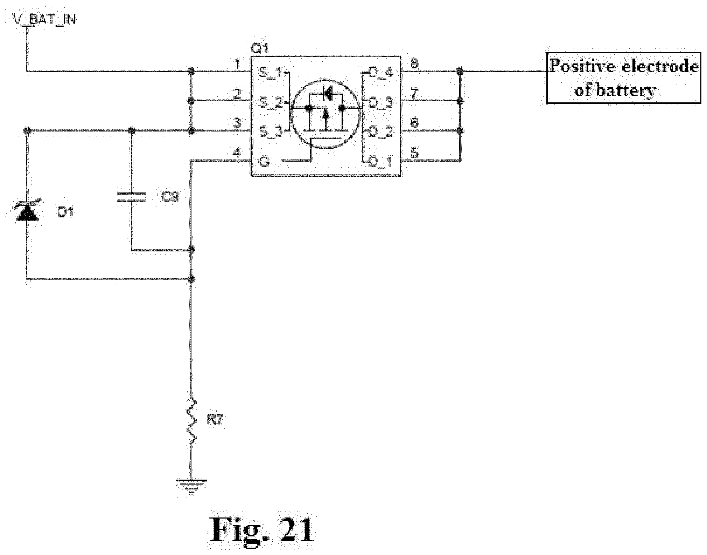

Fig. 20 is a schematic diagram of the charging protection circuit of the battery of example 20, which is different from the schematic diagram of the charging protection circuit of the battery according to example 19 shown in Fig. 17 as follows: the charging protection circuit of the battery shown in Fig. 20 further includes: a charging power source overvoltage protection module 22, for cutting off the charging circuit of the battery when the voltage of the charging power source is more than a preset threshold value. As shown in Fig. 21, the charging power source overvoltage protection module 22 may include a fourth P-channel MOS transistor Q1, a first diode D1 and a fifth resistor R7, where the source electrode of the fourth P-channel MOS transistor Q1 is respectively connected to the positive electrode (expressed as V_BAT_IN in Fig. 21) of the charging power source and the cathode of the first diode D1; the drain electrode of the fourth P-channel MOS transistor Q1 is connected to the positive electrode of the battery; the grid electrode of the fourth P-channel MOS transistor Q1 is respectively connected to the anode of the first diode D1 and one end of the fifth resistor R7; and the other end of the fifth resistor R7 is connected to the negative electrode of the charging power source. The capacitor C9 connected to the first diode D1 in parallel in Fig. 21 plays a role in filtering.

With the charging power source overvoltage protection module 22 according to the example, when the voltage of the charging power source is not more than a preset threshold value, the fourth P-channel MOS transistor Q1 is switched on, and the battery is normally charged; and when the voltage of the charging power source is less than a preset threshold value, the first diode D1 will be broken down, which would cause the fourth P-channel MOS transistor Q1 to be switched off, thereby cutting off the charging circuit of the battery. The charging power source overvoltage protection module 22 is provided to promptly cut off the charging circuit of the battery when the voltage of the charging power source is abnormal, thereby protecting the battery.

### Example 21

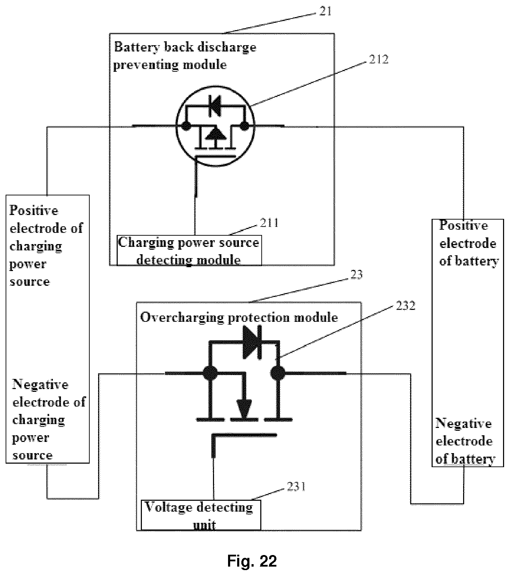

Fig. 22 is a schematic diagram of a charging protection circuit of a battery according to example 21, which is different from the schematic diagram of a charging protection circuit of a battery according to example 19 shown in Fig. 17 as follows: the charging protection circuit of the battery shown in Fig. 22 further includes: at least one overcharging protection module 23 for limiting the charging voltage of the battery and including: a voltage detecting unit 231, for judging whether the voltage of the battery exceeds an overcharging detection voltage threshold of the battery, and outputting an overtcharging signal when the voltage of the battery is more than the overdischarging detection voltage threshold; and a first controlled switch 232, where the controlled end of the first controlled switch 232 is connected to the voltage detecting unit 231, and is disconnected when receiving the overcharging signal, thereby cutting off the charging circuit of the battery. The overcharging protection module 23 shown in Fig. 22 is arranged between the negative electrode of the charging power source and the negative electrode of the battery, but it should be appreciated those skilled in the art that the overcharging protection module 23 may also be arranged between the positive electrode of the charging power source and the positive electrode of the battery, as long as it can realize the function of cutting off the charging circuit of the battery.

The overcharging protection module 23 is provided to guarantee that the battery voltage is not more than the overcharging detection voltage threshold of the battery. Battery overcharging would shorten the service life of the battery. Such design has effectively prolonged the service life of the battery.

Preferably, there may be two or more of the overcharging protection modules 23, and the first controlled switches of the overcharging protection modules 23 are connected in series. When the voltage detecting unit 231 of any one of the plurality of the overcharging protection modules 23 outputs the overcharging signal, the corresponding first controlled switch 232 is controlled to cut off the charging circuit of the battery. The at least plurality of overcharging protection modules 23 are provided to further guarantee the circuit reliability, and can still ensure the circuit to accurately limit the battery voltage when one of the overcharging protection modules 23 fails.

Preferably, the voltage detecting unit 231 according to the example is further used for judging whether the voltage of the battery is less than an overcharging protection termination voltage threshold of the battery when the first controlled switch 232 is disconnected, and controlling the first controlled switch 232 to be switched on again to switch on the charging circuit of the battery when the battery voltage is less than the overcharging protection termination voltage threshold, so as to promptly switch on the charging circuit of the battery when the voltage of the battery is decreased to be less than the overcharging protection termination voltage threshold of the battery, and promptly charge the battery.

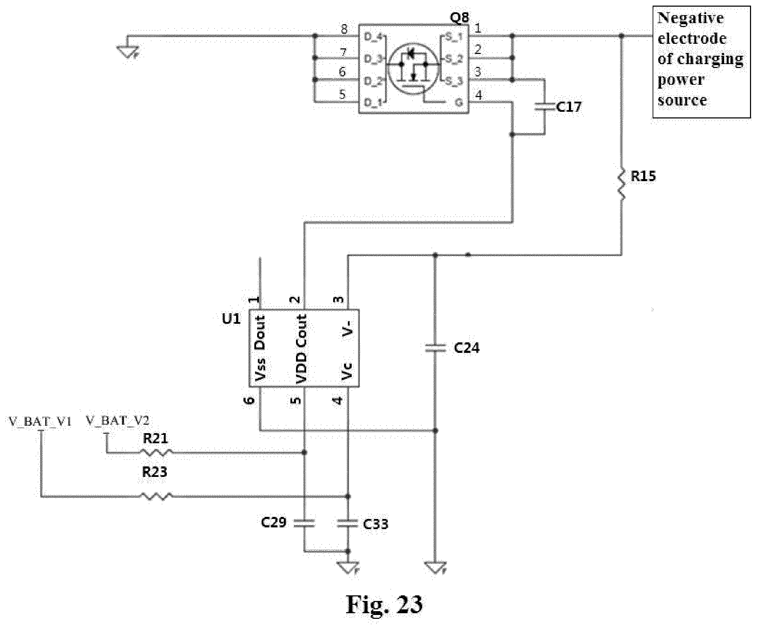

As a specific implementation shown in Fig. 23, when there are two of the batteries connected in series, the voltage detecting unit 231 may be implemented by a chip R5460, and the first controlled switch 232 may be implemented by an N-channel MOS transistor Q8, where, the grid electrode of the N-channel MOS transistor Q8 is connected to the overcharging control pin (Cout) of the chip R5460; the source electrode of the N-channel MOS transistor Q8 is connected to the negative electrode of the charging power source; and the drain electrode of the N-channel MOS transistor Q8 is connected to the negative electrode of the battery. In Fig. 23, V_BAT_V1 represents the voltage of one battery, and V_BAT_V2 represents the sum of voltage of two batteries connected in series. When the chip R5460 detects that the battery voltage is more than the overcharging detection voltage threshold, the overcharging control pin (Cout) outputs an overcharging signal, and controls the N-channel MOS transistor Q8 to be switched off to cut off the charging circuit of the battery; and when the chip R5460 detects that the battery voltage is less than the overcharging protection termination voltage threshold of the battery, the overcharging control pin (Cout) outputs an overcharging termination signal, and controls the N-channel MOS transistor Q8 to be switched on again to switch on the charging circuit of the battery. The connection of other pins of the chip R5460 has nothing to do with the inventiveness of the present invention, and is not described in detail here. The initial connection thereof may be kept. It shall be appreciated by those skilled in the art that other chips or circuits may also be used, when there is only one battery, a chip R5402 may be used for implementation, and the pin of the chip R5402 may be connected with reference to the chip R5460 mentioned above.

Preferably, the charging protection circuit of the battery provided by the example may further include a balanced charging protection module, for judging, when there are two of the batteries connected in series, whether the voltage difference between the two batteries exceeds a preset value, and carrying out balanced discharging when the voltage difference between the two batteries is more than the preset value, or stopping balanced discharging of the two batteries when the voltage difference between the two batteries is less than or equal to the preset value.

In the process of using two batteries connected in series, their voltage will be different, i.e., the electric quantity of the batteries is imbalanced. If two batteries are used in an imbalanced state in a long time, then it is likely to cause a risk of damaging the batteries. The balanced charging protection module can detect the electric quantity of two batteries, and carries out balanced discharging of two batteries at a preset balanced current value when detecting that the voltage difference between the two batteries is more than a preset value, or stops balanced discharging of two batteries when detecting that the voltage difference between the two batteries is less than or equal to the preset value.

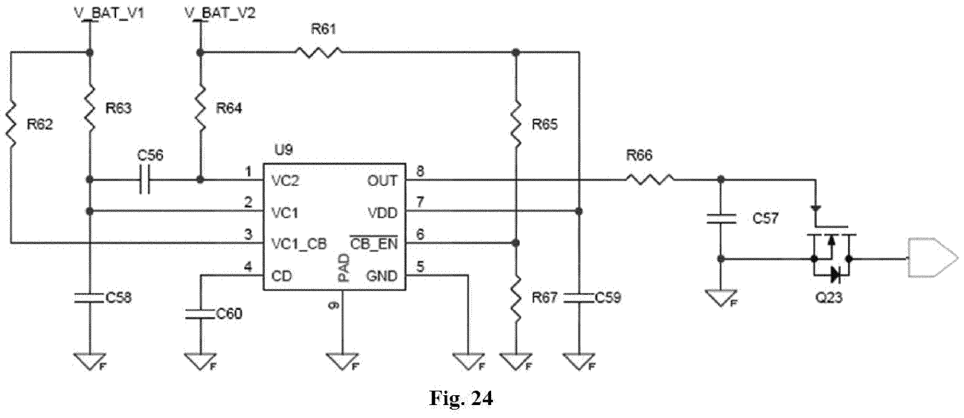

In a specific implementation shown in Fig. 24, the balanced discharging protection module may be implemented by a chip BQ29209. Moreover, the chip BQ29209 can detect the battery voltage. When the battery voltage is more than a secondary overcharging protection voltage threshold, then the N-channel MOS transistor Q23 outputs a secondary overcharging signal to the fourth P-channel MOS transistor Q1 to cut off the fourth P-channel MOS transistor Q1, thereby cutting off the charging circuit of the battery. This further ensures the safety of batteries during charging.

Apparently, the above embodiments are only provided to clearly illustrate the examples, and are not intended to limit the implementation. Those skilled in the art may also make alterations or changes in other different forms based on the above description. Here, it is neither necessary nor possible to exhaust all embodiments. Apparent alterations or changes extended therefrom still fall within the scope of protection of the present invention.

## Claims

1. A discharging protection circuit of a battery, **characterized in** comprising at least one current limiting protection module, for limiting the current flowing through a load, and comprising:
a first comparing unit, for judging whether the current flowing through a load exceeds a first discharging threshold value of the battery, and outputting a first electrical level when the current is more than the first discharging threshold value, or outputting a second electrical level when the current is less than or equal to the first discharging threshold value; and a current limiting unit, comprising a controlled switch and a current limiting power resistor connected to two ends of the controlled switch in parallel, wherein the controlled end of the controlled switch is connected to the first comparing unit, and enables the controlled switch to be disconnected when receiving a first electrical level, or enables the controlled switch to be switched on when receiving a second electrical level, the controlled switch of the current limiting unit comprises: a first resistor (R31), a second resistor (R32), a third resistor (R35), a first N-channel MOS transistor (Q11), a second N-channel MOS transistor (Q13) and a reference voltage source (U7), wherein
one end of the third resistor (R35) serves as the controlled end of the controlled switch, the other end is respectively connected to one end of the second resistor (R32) and the grid electrode of the second N-channel MOS transistor (Q13);
the other end of the second resistor (R32) is respectively connected to the source electrode of the first N-channel MOS transistor (Q11) and the source electrode of the second N-channel MOS transistor (Q13);
the drain electrode of the second N-channel MOS transistor (Q13) is respectively connected to the grid electrode of the first N-channel MOS transistor (Q11) and one end of the first resistor (R31);
the other end of the first resistor (R31) is connected to the output end of a reference voltage source (U7); and
the source electrode and the drain electrode of the first N-channel MOS transistor (Q11) serve as the input end and the output end of the controlled switch.

2. The discharging protection circuit according to claim 1, **characterized in that**, the first comparing unit comprises a comparator (U3), wherein a first input end of the comparator (U3) receives a voltage value of a current limiting detection resistor connected to a load in series, and a second input end receives a preset voltage value, and outputs the first electrical level when the voltage value of the current limiting detection resistor is more than the preset voltage value, or outputs the second electrical level when the voltage value of the current limiting detection resistor is less than or is equal to the preset voltage value.

3. The discharging protection circuit according to claim 1, **characterized in** further comprising
at least one secondary current limiting protection module, wherein the secondary current limiting protection module comprises:
a second comparing unit, for judging whether a current flowing through a load exceeds a second discharging threshold value of the battery when the controlled switch of the current limiting unit is disconnected, and outputs an overcurrent signal when the current is more than the second discharging threshold value; and
a first controlled switch, wherein the controlled end of the first controlled switch is connected to the second comparing unit, the input end of the first controlled switch is connected to the output end of the controlled switch of the current limiting unit, and the first controlled switch is disconnected when receiving the overcurrent signal, thereby cutting off the discharging circuit of the battery, wherein
the second comparing unit comprises: a fifth resistor (R43), a sixth resistor (R45), a seventh resistor (R47), an eighth resistor (R49), a ninth resistor (R51), a first diode (D4), a fourth P-channel MOS transistor (Q15) and a fifth N-channel MOS transistor (Q18), wherein
one end of the fifth resistor (R43) is connected to the positive electrode of the battery; and the other end is respectively connected to one end of the sixth resistor (R45) and the source electrode of the fourth P-channel MOS transistor (Q15);
the other end of the sixth resistor (R43) is respectively connected to one end of the seventh resistor (R47) and the grid electrode of the fourth P-channel MOS transistor (Q15);
the drain electrode of the fourth P-channel MOS transistor (Q15) serves as the output end of the second comparing unit;
the other end of the seventh resistor (R47) is connected to the anode of the first diode (D4); the cathode of the first diode (D4) is connected to the drain electrode of the fifth N-channel MOS transistor (Q18);
the grid electrode of the fifth N-channel MOS transistor (Q18) is respectively connected to one end of the ninth resistor (R51) and one end of the eighth resistor (R49); and
the source electrode of the fifth N-channel MOS transistor (Q18) is respectively connected to the other end of the ninth resistor (R51) and the negative electrode of the battery; and the other end of the eighth resistor (R49) is connected to the negative terminal of a load.

## Patentansprüche

1. Entladungsschutzschaltung einer Batterie, **dadurch gekennzeichnet, dass** sie mindestens ein strombegrenzendes Schutzmodul zum Begrenzen des durch eine Last fließenden Stroms umfasst, und umfassend:
eine erste Vergleichseinheit zum Bewerten, ob der durch eine Last fließende Strom einen ersten Entladegrenzwert der Batterie überschreitet, und zum Ausgeben eines ersten elektrischen Niveaus, wenn der Strom mehr als der erste Entladegrenzwert ist, oder zum Ausgeben eines zweiten elektrischen Niveaus, wenn der Strom weniger als der erste Entladegrenzwert ist, und
eine strombegrenzende Einheit, die einen gesteuerten Schalter und einen strombegrenzenden Leistungswiderstand umfasst, der an zwei Enden parallel an den gesteuerten Schalter angeschlossen ist, wobei das gesteuerte Ende des gesteuerten Schalters an die erste Vergleichseinheit angeschlossen ist und es dem gesteuerten Schalter ermöglicht, getrennt zu werden, wenn er ein erstes elektrisches Niveau empfängt, oder es dem gesteuerten Schalter ermöglicht, angeschaltet zu werden, wenn er ein zweites elektrisches Niveau empfängt, wobei der gesteuerte Schalter der strombegrenzenden Einheit Folgendes umfasst: einen ersten Widerstand (R31), einen zweiten Widerstand (R32), einen dritten Widerstand (R35), einen ersten n-Kanal-MOS-Transistor (Q11), einen zweiten n-Kanal-MOS-Transistor (Q13) und eine Referenzspannungsquelle (U7), wobei
ein Ende des dritten Widerstands (R35) als das gesteuerte Ende des gesteuerten Schalters dient, das andere Ende an ein Ende des zweiten Widerstands (R32) beziehungsweise an die Gitterelektrode des zweiten n-Kanal-MOS-Transistors (Q13) angeschlossen ist,
das andere Ende des zweiten Widerstands (R32) an die Source-Elektrode des ersten n-Kanal-MOS-Transistors (Q11) beziehungsweise an die Source-Elektrode des zweiten n-Kanal-MOS-Transistors (Q13) angeschlossen ist,
die Drain-Elektrode des zweiten n-Kanal-MOS-Transistors (Q13) an die Gitterelektrode des ersten n-Kanal-MOS-Transistor s(Q11) beziehungsweise an ein Ende des ersten Widerstands (R31) angeschlossen ist,
das andere Ende des ersten Widerstands (R31) an das Ausgabeende einer Referenzspannungsquelle (U7) angeschlossen ist und
die Source-Elektrode und die Drain-Elektrode des ersten n-Kanal-MOS-Transistors (Q11) als Eingabeende und Ausgabeende des gesteuerten Schalters dienen.

2. Entladungsschutzschaltung nach Anspruch 1, **dadurch gekennzeichnet, dass** die erste Vergleichseinheit einen Komparator (U3) umfasst, wobei ein erste Eingabeende des Komparators (U3) einen Spannungswert eines strombegrenzenden Detektionswiderstandes empfängt, der in Reihe an eine Last angeschlossen ist, und ein zweites Eingabeende einen voreingestellten Spannungswert empfängt und das erste elektrische Niveau ausgibt, wenn der Spannungswert des strombegrenzenden Detektionswiderstandes mehr als der voreingestellte Spannungswert ist, oder das zweite elektrische Niveau ausgibt, wenn der Spannungswert des strombegrenzenden Detektionswiderstandes weniger als oder gleich dem voreingestellten Spannungswert ist.

3. Entladungsschutzschaltung nach Anspruch 1, **dadurch gekennzeichnet, dass** sie ferner mindestens ein sekundäres strombegrenzendes Schutzmodul umfasst, wobei das sekundäre strombegrenzende Schutzmodul Folgendes umfasst:
eine zweite Vergleichseinheit zum Bewerten, ob ein durch eine Last fließende Strom einen zweiten Entladegrenzwert der Batterie überschreitet, wenn der gesteuerte Schalter der strombegrenzenden Einheit getrennt ist, und zum Ausgeben eines Überstromsignals, wenn der Strom mehr als der zweite Entladegrenzwert ist, und
einen ersten gesteuerten Schalter, wobei das gesteuerte Ende des ersten gesteuerten Schalters an die zweite Vergleichseinheit angeschlossen ist, das Eingabeende des ersten gesteuerten Schalters an das Ausgabeende des gesteuerten Schalters der strombegrenzenden Einheit angeschlossen ist und der erste gesteuerte Schalter getrennt ist, wenn das Überstromsignal empfangen wird, wodurch die entladende Schaltung von der Batterie abgeschnitten wird, wobei
die zweite Vergleichseinheit Folgendes umfasst: einen fünften Widerstand (R43), einen sechsten Widerstand (R45), einen siebenten Widerstand (R47), einen achten Widerstand (R49), einen neunten Widerstand (R51), eine erste Diode (D4), einen vierten p-Kanal-MOS-Transistor (Q15) und einen fünften n-Kanal-MOS-Transistor (Q18), wobei
ein Ende des fünften Widerstands (R43) an die positive Elektrode der Batterie angeschlossen ist und das andere Ende an ein Ende des sechsten Widerstands (R45) beziehungsweise die Source-Elektrode des vierten p-Kanal-MOS-Transistors (Q15) angeschlossen ist,
das andere Ende des sechsten Widerstands (R43) an ein Ende des siebenten Widerstands (R47) beziehungsweise die Gitterelektrode des vierten p-Kanal-MOS-Transistors (Q15) angeschlossen ist,
die Drain-Elektrode des vierten p-Kanal-MOS-Transistors (Q15) als das Ausgabeende der zweiten Vergleichseinheit dient,
das andere Ende des siebenten Widerstands (R47) an die Anode der ersten Diode (D4) angeschlossen ist, die Kathode der ersten Diode (D4) an die Drain-Elektrode des fünften n-Kanal-MOS-Transistors (Q18) angeschlossen ist,
die Gitterelektrode des fünften n-Kanal-MOS-Transistors (Q18) an ein Ende des neunten Widerstands (R51) beziehungsweise an ein Ende des achten Widerstands (R49) angeschlossen ist und
die Source-Elektrode des fünften n-Kanal-MOS-Transistors (Q18) an das andere Ende des neunten Widerstands (R51) bzw. an die negative Elektrode der Batterie angeschlossen ist und das andere Ende des achten Widerstands (R49) an den negativen Anschluss einer Last angeschlossen ist.

## Revendications

1. Circuit de protection de décharge d'une batterie, **caractérisé en ce qu'**il comprend au moins un module de protection à limitation de courant, destiné à limiter le courant circulant à travers une charge, et comprenant :
une première unité de comparaison, destinée à déterminer si le courant circulant à travers une charge dépasse une première valeur de seuil de décharge de la batterie, et à fournir en sortie un premier niveau électrique lorsque le courant est supérieur à la première valeur de seuil de décharge, ou à fournir en sortie un second niveau électrique lorsque le courant est inférieur ou égal à la première valeur de seuil de décharge ; et
une unité de limitation de courant, comprenant un commutateur commandé et une résistance de puissance à limitation de courant connectée à deux extrémités du commutateur commandé en parallèle, dans lequel l'extrémité commandée du commutateur commandé est connectée à la première unité de comparaison, et permet au commutateur commandé d'être déconnecté lors de la réception d'un premier niveau électrique, ou permet au commutateur commandé d'être mis sous tension lors de la réception d'un second niveau électrique, dans lequel le commutateur commandé de l'unité de limitation de courant comprend : une première résistance (R31), une deuxième résistance (R32), une troisième résistance (R35), un premier transistor MOS à canal N (Q11), un deuxième transistor MOS à canal N (Q13) et une source de tension de référence (U7), dans lequel :
une extrémité de la troisième résistance (R35) sert d'extrémité commandée du commutateur commandé, l'autre extrémité est respectivement connectée à une extrémité de la deuxième résistance (R32) et à l'électrode de grille du deuxième transistor MOS à canal N (Q13) ;
l'autre extrémité de la deuxième résistance (R32) est respectivement connectée à l'électrode de source du premier transistor MOS à canal N (Q11) et à l'électrode de source du deuxième transistor MOS à canal N (Q13) ;
l'électrode de drain du deuxième transistor MOS à canal N (Q13) est respectivement connectée à l'électrode de grille du premier transistor MOS à canal N (Q11) et à une extrémité de la première résistance (R31) ;
l'autre extrémité de la première résistance (R31) est connectée à l'extrémité de sortie d'une source de tension de référence (U7) ; et
l'électrode de source et l'électrode de drain du premier transistor MOS à canal N (Q11) servent d'extrémité d'entrée et d'extrémité de sortie du commutateur commandé.

2. Circuit de protection de décharge selon la revendication 1, **caractérisé en ce que** la première unité de comparaison comprend un comparateur (U3), dans lequel une première extrémité d'entrée du comparateur (U3) reçoit une valeur de tension d'une résistance de détection de limitation de courant connectée à une charge en série, et une seconde extrémité d'entrée reçoit une valeur de tension prédéfinie, et fournit en sortie le premier niveau électrique lorsque la valeur de tension de la résistance de détection de limitation de courant est supérieure à la valeur de tension prédéfinie, ou fournit en sortie le second niveau électrique lorsque la valeur de tension de la résistance de détection de limitation de courant est inférieure ou égale à la valeur de tension prédéfinie.

3. Circuit de protection de décharge selon la revendication 1, **caractérisé en ce qu'**il comprend en outre :
au moins un module de protection à limitation de courant auxiliaire, dans lequel le module de protection à limitation de courant auxiliaire comprend :
une seconde unité de comparaison, destinée à déterminer si un courant circulant à travers une charge dépasse une seconde valeur de seuil de décharge de la batterie lorsque le commutateur commandé de l'unité de limitation de courant est déconnecté, et à fournir en sortie un signal de surintensité lorsque le courant est supérieur à la seconde valeur de seuil de décharge ; et
un premier commutateur commandé, dans lequel l'extrémité commandée du premier commutateur commandé est connectée à la seconde unité de comparaison, l'extrémité d'entrée du premier commutateur commandé est connectée à l'extrémité de sortie du commutateur commandé de l'unité de limitation de courant, et le premier commutateur commandé est déconnecté lors de la réception du signal de surintensité, ce qui coupe par conséquent le circuit de décharge de la batterie, dans lequel
la seconde unité de comparaison comprend : une cinquième résistance (R43), une sixième résistance (R45), une septième résistance (R47), une huitième résistance (R49), une neuvième résistance (R51), une première diode (D4), un quatrième transistor MOS à canal P (Q15) et un cinquième transistor MOS à canal N (Q18), dans lequel une extrémité de la cinquième résistance (R43) est connectée à l'électrode positive de la batterie ; et
l'autre extrémité est respectivement connectée à une extrémité de la sixième résistance (R45) et à l'électrode de source du quatrième transistor MOS à canal P (Q15) ;
l'autre extrémité de la sixième résistance (R43) est respectivement connectée à une extrémité de la septième résistance (R47) et à l'électrode de grille du quatrième transistor MOS à canal P (Q15) ;
l'électrode de drain du quatrième transistor MOS à canal P (Q15) sert d'extrémité de sortie de la seconde unité de comparaison ;
l'autre extrémité de la septième résistance (R47) est connectée à l'anode de la première diode (D4) ;
la cathode de la première diode (D4) est connectée à l'électrode de drain du cinquième transistor MOS à canal N (Q18) ;
l'électrode de grille du cinquième transistor MOS à canal N (Q18) est respectivement connectée à une extrémité de la neuvième résistance (R51) et à une extrémité de la huitième résistance (R49) ; et
l'électrode de source du cinquième transistor MOS à canal N (Q18) est respectivement connectée à l'autre extrémité de la neuvième résistance (R51) et à l'électrode négative de la batterie ; et
l'autre extrémité de la huitième résistance (R49) est connectée à la borne négative d'une charge.
